# EUROPÄISCHE PATENTANMELDUNG

(11) **EP 2 573 313 A2**
(43) Veröffentlichungstag der Anmeldung: **27.03.2013**
(21) Anmeldenummer: 12006487.8
(22) Anmeldetag: 14.09.2012
(51) Int. Cl.: E06B 9/68, H02K 16/04, H04L 12/28

(54) **Steuereinrichtung für eine Sonnenschutzanlage**

(30) Priorität: 14.09.2011 DE 202011105883 U
(71) Anmelder: Stengler, Klaus, PE8 5PL (GB)
(72) Erfinder: Stengler, Klaus, PE8 5PL (GB)
(74) Vertreter: FDST Patentanwälte

(57) **Zusammenfassung**

Steuereinrichtung (7) für eine Sonnenschutzanlage (1), mit einer Anzahl von Motorsteuergeräten (9) zur Ansteuerung jeweils eines Stellmotors (3), mittels welchem eine Beschattungseinheit (2), insbesondere eine Jalousie-, Rollladen- oder Markiseneinheit, bewegbar ist, mit einer Anzahl von Befehlsgebern (10), von denen jeder signaltechnisch jeweils mit einem Motorsteuergerät (9) verschaltet ist, und mittels welchen durch einen Nutzer Individualsteuerbefehle (I) zur individuellen Ansteuerung des jeweils zugeordneten Motorsteuergeräts (9) erzeugbar sind, sowie mit einem Zentralsteuergerät (8), das signaltechnisch mit den Motorsteuergeräten (9) verschaltet ist, und das dazu eingerichtet ist, automatisch Zentralsteuerbefehle (Z, N) zur globalen oder gruppenweisen Ansteuerung der Motorsteuergeräte (9) zu erzeugen, wobei zumindest eines der Motorsteuergeräte (9) eine reversibel aktivierbare und deaktivierbare Automatiksperrfunktion (F) aufweist derart, dass dieses Motorsteuergerät (9) bestimmte Zentralsteuerbefehle (Z) nur bei deaktivierter Automatiksperrfunktion (F) durchführt, während es bei aktivierter Automatiksperrfunktion (F) die Ausführung dieser Zentralsteuerbefehle (Z) unterdrückt.

## Beschreibung

Die Erfindung bezieht sich auf eine Steuereinrichtung für eine Sonnenschutzanlage. Die Erfindung bezieht sich ferner auf eine Sonnenschutzanlage mit einer solchen Steuereinrichtung sowie auf ein Motorsteuergerät für eine solche Steuereinrichtung.

Zentralgesteuerte Sonnenschutzanlagen werden vielfach bei Großbauten wie z.B. öffentlichen Gebäuden und Bürogebäuden eingesetzt. Eine solche Sonnenschutzanlage umfasst üblicherweise eine Anzahl von Beschattungseinheiten, die den Gebäudefenstern zugeordnet sind, um die Sonneneinstrahlung in das Gebäude zu beeinflussen. Bei den Beschattungseinheiten einer solchen Sonnenschutzanlage kann es sich beispielsweise um Jalousieeinheiten, Rollladeneinheiten oder Makiseneinheiten handeln, wobei auch eine Kombination verschiedenartiger Beschattungseinheiten im Rahmen ein und derselben Sonnenschutzanlage denkbar ist. Jede Beschattungseinheit ist üblicherweise mittels eines zugeordneten Stellmotors reversibel zwischen einer Öffnungsstellung, in der sie das zugeordnete Fenster freigibt, und einer Schließstellung, in der sie das Fenster abschattet, bewegbar.

Zur Steuerung der Stellmotoren umfasst eine Sonnenschutzanlage üblicherweise eine Steuereinrichtung. Diese umfasst eine Anzahl von Motorsteuergeräten zur Ansteuerung jeweils eines zugeordneten Stellmotors. Eine übliche Steuereinrichtung umfasst des weiteren für jedes Motorsteuergerät einen zugeordneten Befehlsgeber, insbesondere in Form von Steuertastern, durch deren Betätigung sich das zugeordnete Motorsteuergerät, und damit die zugeordnete Beschattungseinheit durch einen Nutzer individuell verstellen lässt. Eine übliche Steuereinrichtung umfasst schließlich regelmäßig ein Zentralsteuergerät, das durch Ausgabe von Zentralsteuerbefehlen die Motorsteuergeräte global oder gruppenweise (insbesondere fassadenweise) ansteuert.

Im Zuge von Energieeinsparmaßnahmen wird von Steuereinrichtungen für Sonnenschutzanlagen in zunehmendem Maße eine energieoptimierte, automatische Steuerung gefordert. Für Europa sind entsprechende gesetzliche Anforderungen beispielsweise in der Energieeinsparungsverordnung (EnV) niedergelegt, die diesbezüglich wiederum auf die Norm DIN 4108-2 Bezug nimmt.

Im Zuge einer solchen energieoptimierten Steuerautomatik werden die Beschattungseinheiten an Gebäudefassaden, die einer direkten Sonneneinstrahlung ausgesetzt sind, bei hohen Umgebungstemperaturen (insbesondere im Sommer) automatisch ausgefahren, um den solaren Wärmeeintrag in das Gebäude und somit die Gebäudeaufheizung zu minimieren. Bei fehlender Sonneneinstrahlung werden die Beschattungseinheiten dagegen automatisch zurückgezogen, um den Lichteintrag in das Gebäude zu erhöhen und somit die Notwendigkeit einer künstlichen Innenraumbeleuchtung möglichst zu vermeiden. Bei niedrigen Umgebungstemperaturen (beispielsweise also im Winter) werden die Beschattungseinheiten dagegen an Gebäudefassaden, die der Sonneneinstrahlung ausgesetzt sind, zurückgezogen, um den solaren Wärmeeintrag zur Unterstützung der Gebäudeheizung zu nutzen.

Eine solche Automatik kann nachteiligerweise aber zu einer häufigen Bewegung der Beschattungseinheiten führen, die von den Gebäudenutzern als unangenehm und störend empfunden werden kann. Insbesondere bei aufgelockerter Bewölkung, bei der die Gebäudefassaden häufig wechselnden Lichtverhältnissen ausgesetzt sind, werden die Beschattungseinheiten durch die Automatik mitunter in ständiger Bewegung gehalten. Die hierdurch verursachte Beeinträchtigung der Gebäudenutzer führt bisweilen dazu, dass eine vorhandene Automatiksteuerung einer Sonnenschutzanlage aufgrund anhaltender Beschwerden deaktiviert wird, oder dass die Steuereinrichtung von einzelnen Gebäudenutzern sogar manipuliert wird, um die Automatiksteuerung außer Kraft zu setzen.

Der Erfindung liegt die Aufgabe zugrunde, eine Steuereinrichtung für eine Sonnenschutzanlage im Hinblick auf die vorbeschriebene Problematik zu verbessern. Bezüglich einer Steuereinrichtung für eine Sonnenschutzanlage wird diese Aufgabe erfindungsgemäß gelöst durch die Merkmale des Anspruchs 1. Vorteilhafte und teils für sich erfinderische Ausgestaltungen und Weiterentwicklungen der Erfindung sind in den Unteransprüchen dargelegt.

Die erfindungsgemäße Steuereinrichtung umfasst eine Anzahl von Motorsteuergeräten zur Ansteuerung jeweils mindestens eines Stellmotors, mittels welchem eine Beschattungseinheit der Sonnenschutzanlage, insbesondere eine Jalousie-, Rolladen- oder Markiseneinheit bewegbar ist. Die Steuereinrichtung umfasst des Weiteren eine Anzahl von Befehlsgebern, von denen jeder signaltechnisch jeweils mit einem Motorsteuergerät verschaltet ist und mittels welchem durch einen Nutzer Individualsteuerbefehle zur individuellen Ansteuerung des zugeordneten Motorsteuergeräts erzeugbar sind. Der Begriff "eine Anzahl von" Motorsteuergeräten bzw. Befehlsgebern ist hierbei dahingehend zu verstehen, dass die Steuereinrichtung im Extremfall auch lediglich ein einziges Motorsteuergerät und/oder einen einzigen Befehlsgeber umfassen kann, wobei die Steuereinrichtung im Regelfall aber eine Mehrzahl, insbesondere sogar eine Vielzahl von Motorsteuergeräten und zugeordneten Befehlsgebern umfasst. Die Steuereinrichtung umfasst schließlich ein Zentralsteuergerät, das signaltechnisch mit den Motorsteuergeräten verschaltet ist, und das dazu eingerichtet ist, automatisch Zentralsteuerbefehle zur globalen oder gruppenweisen Ansteuerung der Motorsteuergeräte zu erzeugen. Als "globale" Ansteuerung wird hierbei ein Zentralsteuerbefehl bezeichnet, der sich unterschiedslos an alle mit der Zentralsteuereinheit verbundenen Motorsteuergeräte richtet. Als "gruppenweise" Ansteuerung wird im Unterschied hierzu ein Zentralsteuerbefehl verstanden, der sich lediglich an eine - nach vorgegebenen Kriterien spezifizierte - Gruppe von Motorsteuergeräten, beispielsweise die einer bestimmten Gebäudefassade zugeordneten Motorsteuergeräte richtet.

Erfindungsgemäß ist nun zumindest eines der Motorsteuergeräte, bevorzugt aber jedes Motorsteuergerät der Steuereinrichtung mit einer reversibel aktivierbaren und deaktivierbaren Automatiksperrfunktion ausgestattet. Die Automatiksperrfunktion hat hierbei die Wirkung, dass dieses Motorsteuergerät bestimmte Zentralsteuerbefehle nur bei deaktivierter Automatiksperrfunktion ausführt, während es bei aktivierter Automatiksperrfunktion die Ausführung dieser Zentralsteuerbefehle unterdrückt (oder verweigert). Die Automatiksperrfunktion kann durch schaltungstechnische Mittel realisiert sein. Im einfachsten Fall kann die Automatiksperrfunktion in diesem Sinne beispielsweise durch einen Schalter realisiert ein, mittels welchem eine das Zentralsteuergerät mit dem Motorsteuergerät verbindende Signalleitung reversibel unterbrochen werden kann, so dass die Zentralsteuerbefehle blockiert werden. Vorzugsweise ist die Automatiksperrfunktion aber softwaretechnisch in einem Steuerprogramm des Motorsteuergeräts implementiert. Die durch die Automatiksperrfunktion bewirkte Unterdrückung der Zentralsteuerbefehle erfolgt vorzugsweise dadurch, dass das Motorsteuergerät die bei aktivierter Sperrfunktion empfangenen Zentralsteuerbefehle ignoriert bzw. verwirft. Grundsätzlich ist jedoch auch denkbar, dass das Motorsteuergerät bei Aktivierung der Automatiksperrfunktion die Übermittlungen von Zentralsteuerbefehlen, insbesondere durch Kommunikation mit dem Zentralsteuergerät abschaltet.

Die Automatiksperrfunktion ermöglicht es einem Nutzer, die Automatiksteuerung für jede Beschattungseinheit der Sonnenschutzanlage individuell und gezielt in Situationen auszuschalten, in denen sie den jeweiligen Nutzer stört. Eine energieoptimierte Automatiksteuerung kann somit zur effektiven Klimasteuerung im Gebäudeinneren eingesetzt werden, ohne dass dies zu einer übermäßigen Beeinträchtigung des Wohlempfindens der Gebäudenutzer führt.

Bei dem oder jedem Befehlsgeber handelt es sich insbesondere um ein übliches Paar von Steuertasten, das mit dem Motorsteuergerät verdrahtet ist, und ein manuelles Ausfahren ("Ab") bzw. Einfahren ("Auf") der zugeordneten Beschattungseinheit ermöglicht. Alternativ hierzu kann es sich bei dem oder jeden Befehlsgeber auch um eine Funkfernsteuerung handeln. Wiederum alternativ ist denkbar, den einem Motorsteuergerät zugeordneten Befehlsgeber softwaretechnisch im Rahmen einer virtuellen Gebäudesteuerung, die beispielsweise über eine gebäudeinterne Website aufrufbar ist, zu implementieren.

Im Sinne eines möglichst einfachen Aufbaus der Steuereinrichtung ist vorzugsweise vorgesehen, dass die Automatiksperrfunktion mittels des ohnehin vorhandenen Befehlsgebers aktivierbar und gegebenenfalls auch deaktivierbar ist, mit dem im Normalbetrieb der Steuereinrichtung das zugeordnete Motorsteuergerät zum Einfahren und Ausfahren der Beschattungseinheit veranlasst werden kann. So ist für den Fall, dass der Befehlsgeber durch ein übliches Paar von Steuertastern gebildet ist, insbesondere vorgesehen, dass die Automatikfunktion durch kurzzeitiges Antippen eines beliebigen Steuertasters ("Auf" oder "Ab") aktivierbar ist. Zweckmäßigerweise ist zusätzlich vorgesehen, dass die Automatiksperrfunktion mittels des Befehlsgebers von einem Nutzer auch wieder deaktivierbar ist. Bei einem aus einem Paar von Steuertastern gebildeten Befehlsgeber wird die Deaktivierung der Automatiksperrfunktion beispielsweise vorgenommen, indem beide Steuertasten ("Auf" und "Ab") gleichzeitig betätigt werden.

Alternativ zu der Aktivierung bzw. Deaktivierung der Automatiksperrfunktion mittels des Befehlsgebers ist im Rahmen der Erfindung auch denkbar, dass die Automatiksperrfunktion durch einen Anwesenheitssensor automatisch deaktiviert wird, wenn der Anwesenheitssensor die Anwesenheit eines Nutzers in einem dem Motorsteuergerät zugeordnetem Innenraum des Gebäudes detektiert. Ein solcher Anwesenheitssensor kann beispielsweise durch einen Näherungssensor oder ein mit einem elektronischen Ausweis (z.B.: RFID-Tag, einem Dongle, etc.) wechselwirkendes Lesegerät gebildet sein. In dieser Ausführung ist das Motorsteuergerät vorzugsweise dazu eingerichtet, die Automatiksperrfunktion wieder zu deaktivieren, wenn der Anwesenheitssensor meldet, dass der Nutzer den Innenraum wieder verlässt.

Um die Energieeinsparungswirkung der automatischen Steuerung trotz der Automatiksperrfunktion möglichst aufrecht zu erhalten, ist vorzugsweise vorgesehen, dass die Automatiksperrfunktion durch das Motorsteuergerät oder alternativ auch durch das Zentralsteuergerät in regelmäßigen Zeitabständen automatisch deaktiviert wird. In einfachster Realisierung wird mit der Deaktivierung der Automatiksperrfunktion ein Timer gestartet, durch dessen Ablauf - beispielsweise nach 6, 12 oder 24 Stunden - die Automatiksperrfunktion automatisch wieder deaktiviert wird. Alternativ hierzu kann vorgesehen sein, dass die Automatiksperrfunktion von dem Motorsteuergerät oder dem Zentralsteuergerät zu einer bestimmten Tageszeit, beispielsweise zu der gewöhnlichen Büroschlusszeit (17 Uhr) oder um 24 Uhr automatisch deaktiviert wird.

Um einem Nutzer die Handhabung der Steuereinrichtung zu vereinfachen, ist das Motorsteuergerät in vorteilhafter Ausführung der Erfindung dazu eingerichtet, als Reaktion auf die Aktivierung und/oder Deaktivierung der Automatiksperrfunktion ein Quittierungssignal auszugeben. Grundsätzlich ist hierbei im Rahmen der Erfindung möglich, dass das Motorsteuergerät das Quittierungssignal als optisches oder akustisches Signal erzeugt. Geeignete Aktoren (zum Beispiel Leuchten oder Lautsprecher) zur Erzeugung des optischen oder akustischen Signals können der besseren Wahrnehmbarkeit halber auch extern des Motorsteuergeräts, zum Beispiel in dem zugeordneten Befehlsgeber angeordnet sein. Um die Hardware herkömmlich erhältlicher Motorsteuergeräte und Befehlsgeber mit möglichst geringem Aufwand in erfindungsgemäßer Weise aufrüsten zu können, ist in einer besonders vorteilhaften Variante der Erfindung das Motorsteuergerät alternativ dazu eingerichtet, das Quittierungssignal in Form einer charakteristischen Ansteuerung des zugeordneten Stellmotors auszugeben. Beispielsweise ist das Motorsteuergerät in diesem Sinne dazu eingerichtet, durch entsprechende Ansteuerung des zugeordneten Stellmotors mit der zugeordneten Beschattungseinheit zu "wackeln", d.h. die Beschattungseinheit ein- oder mehrfach geringfügig ein- und auszufahren.

In einer vorteilhaften Weiterentwicklung der Erfindung ist das Motorsteuergerät dazu eingerichtet, eine vorgegebene Anzahl von Individualsteuerbefehlen als Vorzugsstellung zu speichern. Das Motorsteuergerät speichert hierbei insbesondere die mit dem Individualsteuerbefehl bewirkte Endstellung der Beschattungseinheit sowie die Tageszeit, zu der der Individualsteuerbefehl gegeben wurde. Die Speicherung der Vorzugsstellungen hat hierbei die Wirkung, dass das Motorsteuergerät die gespeicherte Vorzugsstellung (bzw. bei mehreren Vorzugsstellungen die der aktuellen Tageszeit am besten entsprechende Vorzugsstellung) automatisch anfährt, wenn der Nutzer den Befehlsgeber in bestimmter Weise betätigt, insbesondere wenn der Nutzer einen der beiden Steuertasten ("Auf" oder Ab") zweimal kurz hintereinander betätigt.

Grundsätzlich ist im Rahmen der Erfindung denkbar, dass das Motorsteuergerät eine bestimmte Anzahl vorausgegangener Individualsteuerbefehle als Vorzugsstellungen speichert. Um die Gefahr von Fehlbedienungen aber möglichst zu vermeiden, ist vorzugsweise vorgesehen, dass das Motorsteuergerät einen Individualsteuerbefehl nur dann als Vorzugsstellung speichert, wenn der Nutzer vorher einen Speichermodus des Motorsteuergeräts aktiviert hat. Die Aktivierung (und Deaktivierung) des Speichermodus erfolgt wiederum vorzugsweise über den Befehlsgeber, beispielsweise indem der Nutzer beide Steuertasten eines üblichen Befehlsgebers für mehr als 3 Sekunden gleichzeitig betätigt. Auch für die Aktivierung und Deaktivierung des Speichermodus erzeugt das Motorsteuergerät vorzugsweise ein Quittierungssignal in Form einer charakteristischen Ansteuerung der Beschattungseinheit oder durch Erzeugung eines optischen oder akustischen Signals.

Vorzugsweise ist das Motorsteuergerät dazu eingerichtet, auch bei aktivierter Automatiksperrfunktion nicht alle Zentralsteuersignale zu unterdrücken. Insbesondere berücksichtigt das Motorsteuergerät auch bei aktivierter Automatiksperrfunktion ein vorgegebenes Not-Zentralsteuersignal, mit dem das Zentralsteuergerät - zum Beispiel bei aufkommenden Starkwind oder einer Wartung bzw. Reparatur der Sonnenschutzanlage - eine Bewegung der Beschattungseinheiten in einen sicheren Zustand veranlasst.

Gemäß einer weiteren Weiterentwicklung der Erfindung ist vorgesehen, dass mindestens eines der Motorsteuergeräte, (vorzugsweise alle Motorsteuergeräte) über eine bidirektionale Signalverbindung, die wahlweise drahtlos oder drahtgebunden realisiert sein kann, mit dem Zentralsteuergerät verbunden ist. Das derartig geschaltete Motorsteuergerät ist hierbei dazu eingerichtet, mindestens ein Statussignal über den Betriebszustand des Motorsteuergeräts, des zugeordneten Stellmotors- oder der zugeordneten Beschattungseinheit auszugeben. Beispielsweise ist das Motorsteuergerät dazu eingerichtet, dass es eine Meldung an das Zentralsteuergerät abgibt, wenn die zugeordnete Beschattungseinheit aufgrund eines Zentralsteuerbefehls die vorgesehene Endposition erreicht hat. Alternativ kann auch vorgesehen sein, dass das Motorsteuergerät eine Fehlermeldung als Statussignal ausgibt, wenn in Folge eines Zentralsteuerbefehls die vorgesehene Endposition der Beschattungseinheit nicht eingestellt werden kann. Zusätzlich oder alternativ zu den die Sonnenschutzanlage selbstbetreffenden Statussignalen kann das Motorsteuergerät optional auch Statussignale ausgeben, die den Betriebszustand eines der Beschattungseinheit zugeordneten Fensters wiedergeben. In diesem Sinne ist insbesondere optional vorgesehen, dass das Motorsteuergerät signaltechnisch mit einem Fensteröffnungssensor und/oder einem Glasbruchsensor verbunden ist, und ein Signal des Fensteröffnungssensors bzw. Glasbruchsensors als Statussignal ausgibt. Auf diese Weise kann die ohnehin vorhandene Signalverbindung der Steuereinrichtung mit dem Zentralsteuergerät synergetisch dazu benutzt werden, um den Betriebszustand der Gebäudefenster abzufragen. So kann insbesondere zentral ermittelt werden, ob eines der Gebäudefenster unzulässigerweise geöffnet ist. Alternativ kann im Falle eines Glasbruches ein Alarm ausgelöst werden.

Die bidirektionale Signalverbindung zwischen den Motorsteuergeräten und dem Zentralsteuergerät, sowie die Einrichtung des Motorsteuergeräts zur Übermittlung von Statussignalen über den Betriebszustand des Motorsteuergeräts, des zugeordneten Stellmotors, der zugeordneten Beschattungseinheit und/oder eines der Beschattungseinheit zugeordneten Fensters wird als eigenständige Erfindung betrachtet, die auch unabhängig von den übrigen Merkmalen der vorstehend beschriebenen Sonnenschutzanlage vorteilhaft einsetzbar ist.

In einer weiteren Weiterentwicklung der Erfindung ist das Zentralsteuergerät mit einer sogenannten "Watch-Doc-Funktion" ausgestattet, im Rahmen derer es in regelmäßigen Zeitabstanden ein bestimmtes Testsignal an die Motorsteuergeräte übermittelt. Mindestens eines der Motorsteuergeräte ist hierbei in Zusammenwirkung mit dieser Watch-Doc-Funktion des Zentralsteuergeräts dazu eingerichtet, die zugeordnete Beschattungseinheit in einem sicheren Zustand zu bewegen, wenn das Testsignal zum erwarteten Zeitpunkt ausbleibt, sodass ein Ausfall der Signalverbindung oder des Zentralsteuergerätes zu befürchten ist. Auch diese Weiterentwicklung wird als eigenständige Erfindung angesehen, die auch losgelöst von den übrigen Merkmalen der der vorstehend beschriebenen Sonnenschutzanlage vorteilhaft einsetzbar ist.

In einer weiteren Weiterentwicklung der Erfindung, die ebenfalls losgelöst von den übrigen Merkmalen der Sonnenschutzanlage vorteilhaft einsetzbar ist und somit eine eigenständige Erfindung darstellt, weist zumindest eines der Motorsteuergeräte einen Energiezwischenspeicher auf, der einen temporären Notbetrieb des Motorsteuergeräts nach Ausfall einer elektrischen Versorgungsspannung ermöglicht. Das Motorsteuergerät ist hierbei dazu eingerichtet, in dem Notbetrieb - und somit nach Zusammenbruch der Versorgungsspannung - automatisch die Bewegung des zugeordneten Beschattungselements in den sicheren Zustand zu veranlassen.

Gegenstand der Erfindung sind ferner eine Sonnenschutzanlage sowie ein Motorsteuergerät einer Steuereinrichtung für eine solche Sonnenschutzanlage. Die erfindungsgemäße Sonnenschutzanlage umfasst hierbei eine Steuereinrichtung in einer der vorstehend beschriebenen Ausgestaltungsvarianten. Das erfindungsgemäße Motorsteuergerät ist signaltechnisch zur Zuführung von Zentralsteuerbefehlen mit einer Zentralsteuereinheit verbindbar und weist eine reversibel aktivierbare und deaktivierbare Automatiksperrfunktion auf, im Rahmen derer das Motorsteuergerät bestimmte Zentralsteuerbefehle des Zentralsteuergeräts nur bei deaktivierter Automatiksperrfunktion durchführt, während es bei aktivierter Automatiksperrfunktion die Ausführung dieser Zentralsteuerbefehle unterdrückt.

Nachfolgend werden Ausführungsbeispiele anhand einer Zeichnung näher erläutert. Darin zeigt die einzigste Figur in einem schematischen Blockschaltbild eine Sonnenschutzanlage für ein Gebäude mit einer zugehörigen Steuereinrichtung.

Einander entsprechende Teilungsgrößen sind in allen Figuren stets mit gleichen Bezugszeichen versehen.

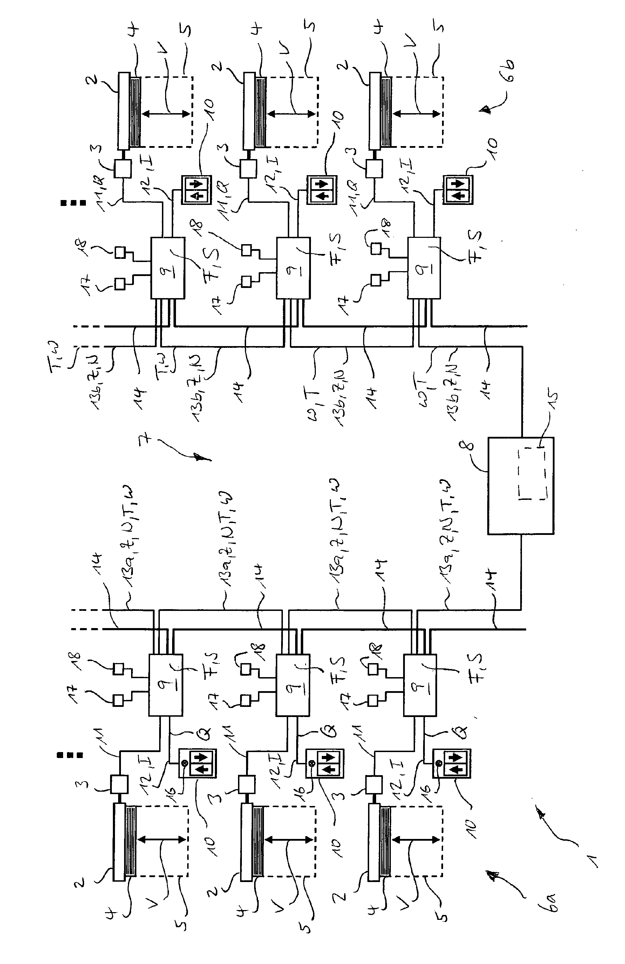

Fig. 1 zeigt schematisch eine Sonnenschutzanlage 1 für ein Gebäude. Die Sonnenschutzanlage 1 umfasst eine Anzahl von Beschattungseinheiten, die exemplarisch jeweils durch einen Rollladen gebildet sind. Jeder Rollladen ist hierbei einem Gebäudefenster zugeordnet. Die Sonnenschutzanlage 1 umfasst des Weiteren eine Anzahl von Stellmotoren 3, von denen jeder einer Beschattungseinheit 2 zugeordnet ist. Jeder Stellmotor 3 ist hierbei mit der Beschattungseinheit 2 derart mechanisch gekoppelt, dass die Beschattungseinheit 2 durch den Stellmotor 3 in einer Verfahrrichtung V reversibel zwischen einem eingefahrenem Zustand 4 und einem (gestrichelt angedeutetem) ausgefahrenen Zustand 5 verstellbar ist. In dem eingefahrerenen Zustand 4 gibt die Beschattungseinheit 2 hierbei das zugeordnete Gebäudefenster frei, während sie das Fenster in dem ausgefahrenem Zustand 5 abschaltet.

Wie im Beispiel gemäß Fig. 1 dargestellt ist, sind die Beschattungseinheiten 2 und die dazugehörigen Stellmotoren 3 in zwei Gruppen 6a, 6b aufgeteilt. Die einer gemeinsamen Gruppe 6a oder 6b zugeordneten Beschattungseinheiten 2 sind hierbei jeweils gemeinsam an einer von zwei unterschiedlich ausgerichteten Gebäudefassaden angeordnet. Beispielsweise sind die Beschattungseinheiten 2 der Gruppe 6a an einer Südfassade des Gebäudes angeordnet, während die Beschattungseinheiten 2 der Gruppe 6b an einer Westfassade des Gebäudes angeordnet sind.

Die Sonnenschutzanlage 1 umfasst außerdem eine Steuereinrichtung 7. Die Steuereinrichtung 7 wird im Wesentlichen gebildet durch ein Zentralsteuergerät 8, eine Anzahl von Motorsteuergeräten 9 sowie eine Anzahl von Befehlsgebern 10. Die Anzahl der Motorsteuergeräte 9 und Befehlsgeber 10 entspricht bevorzugt der Anzahl der Beschattungseinheiten 2 und der Anzahl der Stellmotoren 3. Jedes Motorsteuergerät 9 ist hierbei zur Ansteuerung eines bestimmten, zugeordneten Stellmotors 3 vorgesehen und entsprechend über eine Steuerleitung 11 mit diesem verschaltet. Jeder Befehlsgeber 10 ist andererseits über eine Signalleitung 12 mit einem zugeordnetem Motorsteuergerät 9 verschaltet.

Die Befehlsgeber 10 dienen zur Abgabe von Individualsteuerbefehlen I an das jeweilige Motorsteuergerät 9, aufgrund derer das Motorsteuergerät 9 den zugehörigen Stellmotor 3 ansteuert. Bei den Befehlsgebern 10 handelt es sich im dargestellten Beispiel jeweils um ein Paar von Steuertastern, durch deren Betätigung Individualsteuerbefehle I zum Einfahren ("Auf") und Ausfahren "Ab") der zugeordneten Beschattungseinheit 2 gegeben werden können.

Abweichend von dem dargestellten Beispiel kann ein Motorsteuergerät 9 und ein dazugehöriger Befehlsgeber 10 auch zur gemeinsamen Ansteuerung mehrerer Stellmotoren 3 herangezogen werden.

Das Zentralsteuergerät 8 dient zur Abgabe von Zentralsteuerbefehlen Z durch die mehrere die Motorsteuergeräte 9 insbesondere "gruppenweise" angesteuert werden. Gruppenweise Zentralsteuerbefehle Z richten sich dabei an alle Motorsteuergeräte 9, die der jeweiligen Gruppen 6a oder 6b angehören. Um die Motorsteuergeräte 9 gruppenweise ansprechen zu können, ist das Zentralsteuergerät 8 über jeweils eine separate Signalschleifleitung 13a bzw. 13b mit den der Gruppe 6a oder 6b zugeordneten Motorsteuergeräten 9 verbunden. Zur elektrischen Versorgung sind die Motorsteuergeräte 9 der jeweiligen Gruppe 6a und 6b ferner an eine Versorgungsschleifleitung 14 angeschlossen, über die die Motorsteuergeräte 9 mit einer Motorbetriebsspannung in Höhe von 230 V Wechselspannung sowie einer Elektronikversorgungsspannung in Höhe von 24 V Gleichspannung versorgt werden.

Innerhalb des Zentralsteuergeräts 8 werden die Zentralsteuerbefehle Z durch eine Steuerautomatik 15 erzeugt, die softwaretechnisch in dem Zentralsteuergerät 8 implementiert ist. Die Steuerautomatik 15 erzeugt die Zentralsteuerbefehle Z gruppen- bzw. fasadenspezifisch nach Maßgabe der Sonneneinstrahlung, der die jeweilige Fassade ausgesetzt ist, und der Lufttemperatur, derart dass der für die Gebäudeheizung und -kühlung erforderliche Energieaufwand minimiert wird. Insbesondere werden bei einer Lufttemperatur oberhalb 25°C die Beschattungseinheiten 2 der Gruppe 6a, 6b von dem Zentralsteuergerät 8 durch Abgabe entsprechender Zentralsteuerbefehle Z ausgefahren, wenn die Sonneneinstrahlung, der die jeweilige Fassade ausgesetzt ist, einen vorgegebenen Schwellwert übersteigt. Dagegen werden die Beschattungseinheiten 2 der Gruppe 6a, 6b durch die Steuereinheit 8 eingefahren, wenn bei Außentemperaturen oberhalb 25°C die Sonneneinstrahlung an der jeweiligen Fassade den vorgegebenen Schwellwert unterschreitet. Bei Lufttemperaturen unterhalb 25°C werden die Beschattungseinheiten 2 an einer der Sonneneinstrahlung ausgesetzten Fassade dagegen von dem Zentralsteuergerät 8 eingefahren.

Neben diesen gewöhnlichen Zentralsteuerbefehlen Z, die sich in der Regel lediglich an die Beschattungseinheiten 2 einer der beiden Gruppen 6a oder 6b richten, übermittelt das Zentralsteuergerät 8 auch einen sogenannten Not-Zentralsteuerbefehle N, der sich global an alle Motorsteuergeräte 9 richtet, und der die Motorsteuergeräte 9 dazu veranlasst, die zugehörige Beschattungseinheit 2 in den sicheren, eingefahrenen Zustand 4 zu versetzen. Der Not-Steuerbefehl N wird von der Steuerautomatik 15 insbesondere dann erzeugt, wenn die Windgeschwindigkeit der Umgebung des Gebäudes einen vorgegebenen Grenzwert übersteigt. Ein Not-Steuerbefehl N kann ferner auch durch einen Bediener des Zentralsteuergeräts 8 manuell erzeugt werden, um - beispielsweise für Wartungsarbeiten an den Gebäudefassaden - eine Verstellung der Beschattungseinheiten 2 aus Sicherheitsgründen auszuschließen. Informationen über die Intensität der Sonnenstrahlung an den verschiedenen Gebäudefassaden, über die Höhe der Außentemperatur sowie über die Windgeschwindigkeit werden dem Zentralsteuergerät von (nicht explizit dargestellten) Sensoren, insbesondere einen Lichtsensor pro Fassade, einem Außenthermometer und einem Windmesser, zugeführt.

Um eine Störung von Gebäudenutzern durch die von der Steuerautomatik 15 ausgelösten Stellvorgänge möglichst zu vermeiden, ist jedes Motorsteuergerät 9 mit einer softwaretechnisch implementierten Automatiksperrfunktion F ausgestattet. Die Automatiksperrfunktion F eines Motorsteuergeräts 9 kann von einem Nutzer durch kurzzeitiges Antippen einer beliebigen Steuertaste des zugehörigen Befehlsgebers 10 aktiviert und durch gleichzeitiges Antippen beider Steuertasten des Befehlsgebers 10 wieder deaktiviert werden. Sofern die Aktivierung unterbleibt, wird die Automatiksperrfunktion F durch das Motorsteuergerät 9 täglich um 00.00 Uhr automatisch deaktiviert.

Die Motorsteuergeräte 9 sind hierbei dazu eingerichtet, die Aktivierung und Deaktivierung der Automatiksperrfunktion F in einer für den Gebäudenutzer wahrnehmbaren Weise zu quittieren. Im Beispiel gemäß Fig. 1 wird diese Quittierung bei den Motorsteuergeräten 9 der Gruppen 6a und 6b in unterschiedlicher Weise vorgenommen.

Die der Gruppe 6b zugeordneten Motorsteuergeräte 9 erzeugen ein Quittierungssignal Q, indem sie den jeweils zugeordneten Stellmotor 3 über die Steuerleitung 11 dazu ansteuern, die zugehörige Beschattungseinheit 2 um ein geringfügiges Maß auszufahren, hierauf um den doppelten Stellweg einzufahren und anschließend in die Ausgangsposition zurückzustellen. Als Quittierungssignal Q veranlasst das jeweilige Motorsteuergerät 9 der Gruppe 6b somit eine Wackelbewegung der zugeordneten Beschattungseinheit 2, die in jeder Position der Beschattungseinheit 2 wahrnehmbar ist.

Die der Gruppe 6a zugeordneten Motorsteuergeräte 9 erzeugen das Quittierungssignal Q abweichend dadurch, dass sie über die jeweilige Signalleitung 12 eine, hier in dem jeweils zugeordnetem Befehlsgeber 10 integrierte Signal-Leuchtdiode 16 ansteuern. Die Signal-Leuchtdiode 16 wird dauerhaft angeschaltet, solange die Automatik-Sperrfunktion F in dem zugeordneten Motorsteuergerät 9 aktiviert ist.

Bei aktivierter Automatiksperrfunktion F werden die von dem Zentralsteuergerät 8 übermittelten Zentralsteuerbefehle Z von dem jeweiligen Motorsteuergerät 9 verworfen, indem dass Motorsteuergerät 9 die empfangenen Zentralsteuerbefehle Z ignoriert, also deren Ausführung verweigert. Die Zentralsteuerbefehle Z werden von den Motorsteuergeräten 9 somit nur ausgeführt, wenn die Automatiksperrfunktion F des jeweiligen Zentralsteuergeräts 8 deaktiviert ist. Not-Zentralsteuerbefehle N werden dagegen von jedem Motorsteuergerät 9 sowohl bei aktivierter als auch deaktivierter Automatiksperrfunktion F ausgeführt.
In einer optionalen Ausführung umfasst jedes Motorsteuergerät 9 zusätzlich eine Speicherfunktion S, mit der bis zu 20 verschiedene, individuelle Vorzugsstellungen der jeweils zugeordneten Beschattungseinheit 2 durch einen Nutzer gespeichert werden können. Um eine Vorzugsstellung zu speichern, schaltet der Nutzer das jeweilige Motorsteuergerät 9 in einen Speichermodus, indem er beide Steuertasten des zugeordneten Befehlsgebers 10 für mehr als 3 Sekunden dauerhaft gedrückt hält. Anschließend stellt der Nutzer über den Befehlsgeber 10 die Beschattungseinheit 2 in die gewünschte Endstellung ein und beendet den Speichermodus, in dem er erneut beide Steuertasten des Befehlsgebers 10 für mehr als 3 Sekunden gedrückt hält. Beim Verlassen des Speichermodus speichert das Motorsteuergerät 9 hierbei die eingestellte Endstellung der Beschattungseinheit 2 zusammen mit der aktuellen Tageszeit als Vorzugsstellung ab.

Nach dem Verlassen des Speichermodus kann der Nutzer die gespeicherten Vorzugsstellungen durch eine bestimmte Betätigung des Befehlsgebers 10 aufrufen, zum Beispiel indem er eine beliebige Steuertaste des Befehlsgebers 10 (nach Art eines "Doppelklicks") zweimal kurz hintereinander antippt. Die gespeicherte Vorzugsstellung wird in diesem Fall durch das Motorsteuergerät 9 automatisch angefahren. Sind bereits mehrere Vorzugsstellungen gespeichert, so fährt das Motorsteuergerät 9 diejenige Vorzugsstellung an, die hinsichtlich ihrer Tageszeit der aktuellen Tageszeit am nächsten kommt. Um dem Nutzer die Handhabung der Speicherfunktion S zu vereinfachen, sind die Motorsteuergeräte 9 dazu eingerichtet, die Aktivierung und die Deaktivierung des Speichermodus in gleicher oder ähnlicher Weise zu quittieren wie die Aktivierung bzw. Deaktivierung der Automatiksperrfunktion F. Die der Gruppe 6a zugeordneten Motorsteuergeräte 9 sind abweichend aber hierzu eingerichtet, die Signal-Leuchtdiode 16 in den zugeordneten Befehlsgebern 10 während des Betriebs im Speichermodus blinkend anzusteuern, um den Speichermodus von der aktivierten Automatik-Steuerfunktion F unterscheiden zu können.

In einer weiteren optionalen Weiterentwicklung sind die Signalschleifleitungen 13a, 13b, durch die die Motorsteuergeräte 9 mit dem Zentralsteuergerät 8 verbunden sind, direktional ausgeführt. Die Motorsteuergeräte 9 erhalten in diesem Fall nicht lediglich die Zentralsteuerbefehle Z und N von dem Zentralsteuergerät 8, sondern senden ihrerseits Statussignale T an das Zentralsteuergerät 8 zurück. Die Statussignale T umfassen insbesondere Fehlersignale, die jedes der Motorsteuergeräte 9 dann ausgibt, wenn das Motorsteuergerät 9 aufgrund eines Fehlers einen angeforderten Stellvorgang nicht ordnungsgemäß abschließen kann.

Die Statussignale T umfassen ferner Sensorsignale von externen Sensoren, die an das jeweilige Motorsteuergerät 9 angeschlossen sind. So ist im Beispiel gemäß Fig. 1 an jedes der Motorsteuergeräte 9 jeweils ein Fensteröffnungssensor 17 und ein Glasbruchsensor 18 angeschlossen, wobei diese Sensoren 17 und 18 das dem Motorsteuergerät 9 jeweils zugeordnete Gebäudefenster überwachen. Im Falle eines offenen Fensters oder bei Bruch der Fensterscheibe gibt der jeweilige Sensor 17 bzw. 18 ein entsprechendes Sensorsignal an das angeschlossene Motorsteuergerät 9 aus, das dieses Sensorsignal als Statussignal T an das Zentralsteuergerät 8 weiterreicht.

In einer weiteren optionalen Ausgestaltung ist das Zentralsteuergerät 8 schließlich mit einer sogenannten "Watch-Doc"-Funktion ausgestattet, im Rahmen derer das Zentralsteuergerät 8 in regelmäßigen Zeitabständen (beispielsweise einmal pro Minute) ein kurzes, pulsartiges Testsignal W über die Signalschleifleitungen 13a, 13b an die angeschlossenen Motorsteuergeräte 9 ausgibt. Durch das Testsignal W wird jeweils ein in jedem Motorsteuergerät 9 laufender Timer zurückgesetzt, dessen Ablaufdauer das gewöhnliche Intervall zwischen zwei Testsignalen W deutlich, bevorzugt um ein Mehrfaches übersteigt.

Für den Fall dass der Timer - mangels Erhalt weiterer Testsignale W - außerplanmäßig ablaufen sollte, veranlasst das Motorsteuergerät 9 die Bewegung der zugeordneten Beschattungseinheit 2 in den sicheren, eingefahrenen Zustand 4.

Des Gleichen veranlasst jedes Motorsteuergerät 9 in einer weiteren optionalen Ausgestaltung die Bewegung der zugeordneten Beschattungseinheit 2 in den sicheren Zustand 4, wenn in der Versorgungsschleifleitung 14 die Spannung zusammenbricht. Die für diesen Notbetrieb erforderliche elektrische Leistung wird in diesem Fall durch einen in dem Motorsteuergerät 9 integrierten Energiespeicher, insbesondere in Form eines Akkumulators oder eines Kondensators zur Verfügung gestellt.

### Bezugszeichenliste

- 1: Sonnenschutzanlage
- 2: Beschattungseinheit
- 3: Stellmotor
- 4: (eingefahrener) Zustand
- 5: (ausgefahrener) Zustand
- 6a, 6b: Gruppe
- 7: Steuereinrichtung
- 8: Zentralsteuergerät
- 9: Motorsteuergerät
- 10: Befehlsgeber
- 11: Steuerleitung
- 12: Signalleitung
- 13a, 13b: Signalschleifleitung
- 14: Versorgungsschleifleitung
- 15: Steuerautomatik
- 16: Signal-Leuchtdiode
- 17: Fensteröffnungssensor
- 18: Glasbruchsensor
- V: Verfahrrichtung

- F: Automatiksperrfunktion
- I: Individual-Steuerbefehl
- N: Not-Zentralsteuerbefehl
- Q: Quittierungssignal
- S: Speicherfunktion
- T: Statussignal
- W: Testsignal
- Z: Zentralsteuerbefehl

## Patentansprüche

1. Steuereinrichtung (7) für eine Sonnenschutzanlage (1),
- mit einer Anzahl von Motorsteuergeräten (9) zur Ansteuerung jeweils eines Stellmotors (3), mittels welchem eine Beschattungseinheit (2), insbesondere eine Jalousie-, Rollladen- oder Markiseneinheit, bewegbar ist,
- mit einer Anzahl von Befehlsgebern (10), von denen jeder signaltechnisch jeweils mit einem Motorsteuergerät (9) verschaltet ist, und mittels welchen durch einen Nutzer Individualsteuerbefehle (I) zur individuellen Ansteuerung des jeweils zugeordneten Motorsteuergeräts (9) erzeugbar sind, sowie
- mit einem Zentralsteuergerät (8), das signaltechnisch mit den Motorsteuergeräten (9) verschaltet ist, und das dazu eingerichtet ist, automatisch Zentralsteuerbefehle (Z, N) zur globalen oder gruppenweisen Ansteuerung der Motorsteuergeräte (9) zu erzeugen,
wobei zumindest eines der Motorsteuergeräte (9) eine reversibel aktivierbare und deaktivierbare Automatiksperrfunktion (F) aufweist derart, dass dieses Motorsteuergerät (9) bestimmte Zentralsteuerbefehle (Z) nur bei deaktivierter Automatiksperrfunktion (F) durchführt, während es bei aktivierter Automatiksperrfunktion (F) die Ausführung dieser Zentralsteuerbefehle (Z) unterdrückt.

2. Steuereinrichtung (7) nach Anspruch 1,
wobei die Automatiksperrfunktion (F) mittels des dem Motorsteuergerät (9) zugeordneten Befehlsgebers (10) aktivierbar ist.

3. Steuereinrichtung (7) nach Anspruch 1 oder 2,
wobei das Motorsteuergerät (9) oder das Zentralsteuergerät (8) dazu eingerichtet ist, die Automatiksperrfunktion (F) zu einer bestimmten Zeit automatisch zu deaktivieren.

4. Steuereinrichtung (7) nach einem der Ansprüche 1 bis 3,
wobei das Motorsteuergerät (9) dazu eingerichtet ist, als Reaktion auf die Aktivierung und/oder Deaktivierung der Automatiksperrfunktion (F) ein Quittierungssignal (Q) auszugeben.

5. Steuereinrichtung (7) nach Anspruch 3,
wobei das Motorsteuergerät (9) dazu eingerichtet ist, das Quittierungssignal (Q) in Form einer charakteristischen Ansteuerung des zugeordneten Stellmotors (3) auszugeben.

6. Steuereinrichtung (7) nach einem der Ansprüche 1 bis 5,
wobei das Motorsteuergerät (9) dazu eingerichtet ist, eine vorgegebene Anzahl von Individualsteuerbefehlen (I) hinsichtlich der jeweiligen Endstellung der Beschattungseinheit (2) und der Tageszeit zu speichern, und wobei das Motorsteuergerät (9) dazu eingerichtet ist, den Stellmotor (3) auf Anforderung automatisch entsprechend der gespeicherten Individualsteuerbefehle (I) anzusteuern.

7. Steuereinrichtung (7) nach einem der Ansprüche 1 bis 6,
wobei das Motorsteuergerät (9) dazu eingerichtet ist, ein vorgegebenes Not-Zentralsteuersignal (N) zur Bewegung der Beschattungseinheit (2) in einen sicheren Zustand auch bei aktivierter Automatiksperrfunktion (F) durchzuführen.

8. Steuereinrichtung nach einem der Ansprüche 1 bis 7,
wobei mindestens eines der Motorsteuergeräte (9) über eine bidirektionale Signalverbindung (13a, 13b) mit dem Zentralsteuergerät (8) verbunden ist, und wobei dieses Motorsteuergerät (9) dazu eingerichtet ist, mindestens ein Statussignal (T) über den Betriebszustand des Motorsteuergeräts (9), des zugeordneten Stellmotors (3), der zugeordneten Beschattungseinheit (2) und/oder eines der Beschattungseinheit (2) zugeordneten Fensters auszugeben.

9. Steuereinrichtung (7) nach Anspruch 8,
wobei das über die bidirektionale Signalverbindung (13a, 13b) mit dem Zentralsteuergerät (8) verbundene Motorsteuergerät (9) signaltechnisch mit einem Fensteröffnungssensor (17) und/oder einem Glasbruchsensor (18) verbunden ist, und wobei dieses Motorsteuergerät (9) dazu eingerichtet ist, ein Signal des Fensteröffnungssensors (17) bzw. Glasbruchsensors (18) als Statussignal (T) auszugeben.

10. Steuereinrichtung (7) nach einem der Ansprüche 1 bis 9,
wobei das Zentralsteuergerät (8) dazu eingerichtet ist, in regelmäßigen Zeitabständen ein bestimmtes Testsignal (W) an die Motorsteuergeräte (9) zu übermitteln, und wobei mindestens eines der Motorsteuergeräte (9) dazu eingerichtet ist, die zugeordnete Beschattungseinheit (2) in einen sicheren Zustand (4) zu bewegen, wenn das Testsignal (W) ausbleibt.

11. Steuereinrichtung (7) nach einem der Ansprüche 1 bis 10,
wobei zumindest eines der Motorsteuergeräte (9) einen Energiezwischenspeicher für einen temporären Notbetrieb des Motorsteuergeräts (9) nach Ausfall einer elektrischen Versorgungsspannung aufweist, und wobei das Motorsteuergerät (9) dazu eingerichtet ist, in dem Notbetrieb die Bewegung des zugeordneten Beschattungselements (2) in einen sicheren Zustand (4) zu veranlassen.

12. Sonnenschutzanlage (1) mit einer Anzahl von Beschattungseinheiten (2), insbesondere Jalousie-, Rollladen- oder Markiseneinheiten, mit einer Anzahl von Stellmotoren (3), mittels welchen jeweils eine Beschattungseinheit (2) bewegbar ist, sowie mit einer Steuereinrichtung (7) nach einem der Ansprüche 1 bis 11.

13. Motorsteuergerät (9) für eine Steuereinrichtung (7) nach einem der Ansprüche 1 bis 11, das signaltechnisch zur Zuführung von Zentralsteuerbefehlen (Z) mit einem Zentralsteuergerät (8) verbindbar ist, und das eine reversibel aktivierbare und deaktivierbare Automatiksperrfunktion (F) aufweist derart, dass das Motorsteuergerät (9) bestimmte Zentralsteuerbefehle (Z) des Zentralsteuergeräts (8) nur bei deaktivierter Automatiksperrfunktion (F) durchführt, während es bei aktivierter Automatiksperrfunktion (F) die Ausführung dieser Zentralsteuerbefehle (Z) unterdrückt.
